# EUROPÄISCHE PATENTSCHRIFT

(11) **EP 1 240 699 B1**
(45) Veröffentlichungstag und Bekanntmachung des Hinweises auf die Patenterteilung: **25.02.2004**
(21) Anmeldenummer: 00988752.2
(22) Anmeldetag: 23.11.2000
(51) Int. Cl.: H02G 11/00

(54) **STRANG UND VERFAHREN ZUR HERSTELLUNG EINES FASERVERSTÄRKTEN STRANGES EINER LEITUNGSFÜHRUNGSANORDNUNG**
LINE AND METHOD FOR PRODUCING A FIBRE REINFORCED LINE OF A WIRING ARRANGEMENT
BARRE ET PROCEDE DE PRODUCTION D'UNE BARRE RENFORCEE PAR DES FIBRES, DESTINEE A UN DISPOSITIF DE GUIDAGE DE LIGNES

(30) Priorität: 23.12.1999 DE 19962829
(43) Veröffentlichungstag der Anmeldung: 18.09.2002
(73) Patentinhaber: Kabelschlepp GmbH, 57074 Siegen (DE)
(72) Erfinder: WEHLER, Herbert, 57290 Neunkirchen (DE)
(74) Vertreter: Neumann, Ditmar
(86) Internationale Anmeldenummer: PCT/EP2000/011683
(87) Internationale Veröffentlichungsnummer: WO 2001/048885

(56) Entgegenhaltungen:
- EP-A- 0 490 022
- EP-A- 0 544 027
- DE-A- 19 752 377
- DE-B- 1 131 480
- DE-C- 4 426 598

## Beschreibung

Der Gegenstand der Erfindung bezieht sich auf einen Strang aus Kunststoff und auf eine Leitungsführungsanordnung zum Führen wenigstens einer Leitung sowie auf ein Verfahren zur Herstellung eines Stranges.

Leitungsführungsanordnungen werden zum Führen von Leitungen von einem ortsfesten Anschluß zu einem beweglichen Verbraucher verwendet. Bekannt sind Leitungsführungsanordnungen, welche miteinander gelenkig verbundene Segmente aufweisen. Jedes Segment weist Seitenwandbereiche auf. Die Segmente sind durch Quertrennungen des Stranges gebildet. Die Quertrennungen verlaufen quer zur Längsrichtung des Strangs. Sie sind in gewählten Abständen zueinander ausgebildet. Die Quertrennungen erstrecken sich in dem Seitenwandbereich bis in die Nähe eines Tragwandbereichs. Die Stränge ermöglichen eine Schleifenbildung der Leitungsführungsanordnung. Eine solche Ausgestaltung eines Stranges ist durch die EP 0 544 027 A1 bekannt.

Weiterhin sind durch die EP 0 490 022 A 1 Stränge für eine Leitungsführungsanordnung bekannt, die wenigstens teilweise als ein Profilstrang ausgebildet sind. Der Profilstrang weist einen im wesentlichen quer zum Seitenwandbereich hervorstehenden Tragwandbereich auf, wobei die Quertrennungen sich durch den Seitenwandbereich mindestens bis in die Nähe des Tragwandbereichs fortsetzen.

Derart ausgebildete Stränge aus Kunststoff für eine Leitungsführungsanordnun sind aus dem Kunststoff extrudiert. Die Quertrennungen werden mechanisch vorgenommen.

Die Stränge einer Leitungsführungsanordnung werden bei der Schleifenbildung einer Biegebeanspruchung ausgesetzt. Diese Beanspruchung ist abhängig von dem Krümmungsradius, der bei der Schleifenbildung der Leitungsführungsanordnung verwirklicht wird. Bevorzugt werden kleine Krümmungsradien, um die Leitungsführungsanordnung auf einen kleinen Bauraum zu begrenzen.

Diese Biegebeanspruchungen wirken wiederholt auf den Tragwandbereich ein und können bei relativ biegesteifen Profilsträngen zu Rissen im Material des Tragwandbereichs führen, welche die Lebensdauer der Leitungsführungsanordnung stark beeinflussen.

Hiervon ausgehend liegt der vorliegenden Erfindung die Aufgabe zugrunde, den bekannten Strang sowie eine Leitungsführungsanordnung so weiterzubilden, daß eine erhöhte Lebensdauer erreicht wird. Eine weitere Aufgabe der vorliegenden Erfindung ist es, ein Verfahren zur Herstellung eines Stranges mit erhöhter Biegewechselfestigkeit anzugeben

Diese Aufgaben werden erfindungsgemäß durch einen Strang einer Leitungsführungsanordnung mit den Merkmalen des Anspruchs 1 und einem Verfahren zur Herstellung des Stranges mit den Merkmalen des Anspruchs 11 gelöst. Vorteilhafte Weiterbildungen und Ausgestaltungen der Erfindung sind Gegenstand der abhängigen Ansprüche.

Der Strang aus Kunststoff einer Leitungsführungsanordnung besitzt gelenkig miteinander verbundene Segmente, welche längs der Strangrichtung Seitenwandbereiche aufweisen. Diese sind durch quer zur Längsrichtung des Strangs ausgeprägte Quertrennungen begrenzt, die sich in ausgewählten Abständen zueinander bis in die Nähe eines Tragwandbereichs erstrecken. Der Strang besitzt wenigstens teilweise mindestens eine Verstärkungsfaser. Die Verstärkungsfaser weist im wesentlichen eine Erstreckung parallel zur Strangrichtung auf und ist im wesentlichen im Tragwandbereich angeordnet. Durch wenigstens eine solche Verstärkungsfaser wird die Rißausbreitung im Tragwandbereich bei häufiger Biegebeanspruchung reduziert und erhöht somit die Lastspielzahl des Strangs, wodurch auch die Lebensdauer des Strangs erhöht wird. Die Anordnung der Verstärkungsfaser ist bevorzugt im wesentlichen in der neutralen Phase des Strangs ausgeführt. Die neutrale Phase verläuft innerhalb des Tragwandbereichs. Auf diese Weise wird die Verstärkungsfaser einer geringen mechanischen Beanspruchung ausgesetzt.

Zu einer weiteren Erhöhung der Biegewechselfestigkeit des Strangs und somit auch der Leitungsführungsanordnung wird vorgeschlagen, daß sich die Verstärkungsfaser wenigstens über die gesamte Länge des Strangs erstreckt. Auf diese Weise ist gewährleistet, daß sich alle Segmente des Strangs über eine bestimmte Lastspielzahl der Biegebeanspruchungen ähnlich verhalten.

Nach einer noch weiteren vorteilhaften Ausgestaltung des Strangs für eine Leitungsführungsanordnung wird vorgeschlagen, daß sich die Verstärkungsfaser über den Strang hinaus erstreckt. Die Bereiche der Verstärkungsfaser, die stirnseitig über die Länge des Strangs hinausragen, dienen als Befestigungs- oder Verbindungsstelle. Die dem Strang überstehenden Bereiche der Verstärkungsfaser können auf diese Weise mit einem weiteren Strang verbunden werden. Weiterhin können diese hervorstehenden Bereich der Verstärkungsfaser mit einem Wandbefestigungsteil verbunden werden. Besonders vorteilhaft ist es, die hinausragenden Bereiche der Verstärkungsfaser mit einer Anschlußvorrichtung einzuspannen, welche eine Relativbewegung der Verstärkungsfaser gegenüber dem Strang reduziert oder verhindert. Damit wird eine Aufnahme bzw. Übertragung auftretender Zugkräfte vom Strang auf die Verstärkungsfaser erreicht.

Gemäß einer noch weiteren vorteilhaften Ausgestaltung ist die Verstärkungsfaser an dem Tragwandbereich geführt. Die Verstärkungsfaser ist demnach so angeordnet, daß eine Relativbewegung zwischen Verstärkungsfaser und Tragwandbereich möglich ist. Dies bietet die Möglichkeit, daß die Verstärkungsfaser einfach und lösbar an dem Tragwandbereich montiert werden kann.

Bevorzugt ist die Ausbildung eines Stranges, bei dem die Verstärkungsfaser wenigstens teilweise an dem Tragwandbereich befestigt ist. Dies verhindert eine Relativbewegung zwischen Strang und Verstärkungsfaser. Eine derart ausgeführte Befestigung verhindert Verschleißerscheinungen der Verbindungsfaser und/oder des Strangs, wie sie aus der Relativbewegung zueinander und der damit verbundenen Reibung an den Oberflächen resultieren.

Die Verstärkungsfaser ist bevorzugt derart angeordnet, daß die Verstärkungsfaser vom Material des Tragwandbereichs wenigstens teilweise umschlossen ist. Die Ausbildung einer Vorrichtung zur Anbringung der Verstärkungsfaser kann somit in den Herstellungsprozeß des Strangs integriert werden, und es kann auf weitere fügende Verfahren verzichtet werden.

Gemäß einer noch weiteren vorteilhaften Ausgestaltung des Strangs besitzt die Verstärkungsfaser eine höhere Biegewechsel- und/oder Zugfestigkeit als der Tragwandbereich. Eine höhere Biegewechsel- und/oder Zugfestigkeit der Verstärkungsfaser im Tragwandbereich reduziert die Rißausbreitungsge-schwindigkeit und erhöht deutlich die erreichbare Lastspielzahl unter Biegebeanspruchung. Eine erhöhte Biegewechsel- und/oder Zugfestigkeit der Verstärkungsfaser gegenüber dem Tragwandbereich kann mit einem unterschiedlichen Material der Verstärkungsfaser gegenüber dem Material des Tragwandbereichs und/oder einer geeigneten konstruktiven Ausgestaltung der Verstärkungsfaser erreicht werden.

Bevorzugt ist die Verstärkungsfaser als Stahldraht ausgeführt. Aufgrund seiner Biegewechsel- und Zugfestigkeitseigenschaften erhöht der Stahldraht die erreichbare Lastspielzahl unter Biegewechselbeanspruchung. Ein bevorzugter kreisförmiger Querschnitt des Stahldrahtes reduziert eine Rißentstehung bei Biegebeanspruchung in der Nähe der Verstärkungsfaser gegenüber anderen Querschnittsprofilen. Die mechanischen Eigenschaften des Stahldrahtes unterstützen eine problemlose Schleifenbildung der Leitungsführungsanordnung, indem er sich dem geforderten Krümmungsradius anpaßt. Gemäß weiterer Ausführungsbeispiele ist die Verstärkungsfaser wenigstens teilweise aus Glasfaser. Kohlefaser, Kevlarfaser oder Textilfaser gebildet.

Eine noch weitere vorteilhafte Ausgestaltung eines Strangs für eine Leitungsführungsanordnung zeichnet sich dadurch aus, daß der Strang mehrere Verstärkungsfasern im Tragwandbereich besitzt, die vorzugsweise im wesentlichen symmetrisch zu dem Seitenwandbereich angeordnet sind. Dies ist dann von besonderer Bedeutung, wenn der Strang als Profilstrang ausgeführt ist. Die Anordnung mehrerer Verstärkungsfasern im Tragwandbereich im wesentlichen symmetrisch zu dem Seitenwandbereich ermöglicht eine gleichmäßigere Lastverteilung im Tragwandbereich.

Nach einem noch weiteren erfinderischen Gedanken wird eine Leitungsführungsanordnung vorgeschlagen, bei der mindestens zwei im wesentlichen parallele Stränge mit Stegen verbunden sind, die in gewählten Abständen zueinander an gegenüberliegenden Segmenten befestigt sind, wobei die Segmente und die Stege einen Führungskanal zum Führen wenigstens einer Leitung begrenzen. Die parallele Anordnung der Stränge gewährleisten, daß eine Leitungsführungsanordnung konstanter Breite vorliegt. Die Stege, die mit gegenüberliegenden Segmenten befestigt sind, erhöhen die Torsionssteifigkeit der Leitungsführungsanordnung. Die erhöhte Biegewechselfähigkeit des Strangs ermöglicht somit eine erhöhte Lebensdauer der Leitungsführungsanordnung.

Ein Verfahren zum Herstellen eines Strangs aus Kunststoff einer Leitungsführungsanordnung, der gelenkig verbundene Segmente hat, die längs der Strangrichtung Seitenwandbereiche aufweisen und deren Begrenzung quer zur Längsrichtung des Strangs ausgeprägte Quertrennungen sind, die sich in ausgewählten Abständen zueinander bis in die Nähe eines Tragwandbereichs erstrecken, bei dem der Strang extrudiert und die Segmente ausgebildet werden, zeichnet sich dadurch aus, daß vor oder nach der Ausbildung der Segmente mindestens eine Verstärkungsfaser im wesentlichen am Tragwandbereich und im wesentlichen parallel zur Strangrichtung vorgesehen wird. Unabhängig vom Zeitpunkt der Ausbildung der Segmente wird die wenigstens eine Verstärkungsfaser am Tragwandbereich angebracht. Zu diesem Zweck können zusätzliche fügende Verfahren und/oder erforderliche Vorrichtungen verwendet werden.

Nach einer vorteilhaften Ausgestaltung des Verfahrens zum Herstellen eines Strangs einer Leitungsführungsanordnung wird vorgeschlagen, daß im Tragwandbereich bevorzugt eine Längsnut ausgebildet und die Verstärkungsfaser in diese eingelegt wird. Die Längsnut ermöglicht eine Führung der Verstärkungsfaser am Tragwandbereich. Entsprechend der Ausführungsform der Längsnut kann die Bewegungsfreiheit der Verbindungsfaser eingeschränkt werden. Zusätzlich besteht die Möglichkeit, daß die Verstärkungsfaser mittels weiterer fügender Verfahren in der Nähe der Nut mit dem Tragwandbereich derart verbunden wird, daß keine Relativbewegung zwischen Verstärkungsfaser und Tragwandbereich möglich ist.

Gemäß einem weiteren vorteilhaften Gedanken wird ein Verfahren zum Herstellen eines Strangs aus Kunststoff einer Leitungsfuhrungsanordnung vorgeschlagen, der gelenkig verbundene Segmente hat, die längs der Strangrichtung Seitenwandbereiche aufweisen und deren Begrenzung quer zur Längsrichtung des Strangs ausgeprägte Quertrennungen sind, die sich in ausgewählten Abständen zueinander bis in Nähe eines Tragwandbereichs erstrecken, bei dem Strang extrudiert und die Segmente ausgebildet werden, wobei während dem Verfahren vor dem Extrudiervorgang die wenigstens eine Verstärkungsfaser in die Extrudierform eingelegt wird. Die Verstärkungsfaser wird dabei in der Extrudierform derart positioniert, daß sie nach dem Aushärtungsprozeß des Kunststoffes im oder am Tragwandbereich angeordnet ist. Die Befestigung der Verstärkungsfaser mit dem Strang ist somit in die Ausbildung des Strangs integriert.

Weitere Einzelheiten und Vorteile des Strangs aus Kunststoff einer Leitungsführungsanordnung werden anhand der in den Zeichnungen dargestellten Ausführungsbeispiele erläutert. Es zeigen:
- Fig. 1: schematisch und in einer perspektivischen Darstellung ein Ausführungsbeispiel eines Strangs für eine Leitungsfuhrungsanordnung.
- Fig. 2: ein weiteres Ausführungsbeispiel eines Strangs für eine Leitungsführungsanordnung in einer perspektivischen Darstellung,
- Fig. 3: eine Detailansicht des Ausführungsbeispiels aus Fig. 2,
- Fig. 4: eine noch weitere Ausführungsform eines Strangs für eine Leitungsführungsanordnung mit eingespannter Verstärkungsfaser,
- Fig. 5: eine perspektivische Darstellung eines Ausführungsbeispieles einer Leitungsführungsanordnung.
- Fig. 6: eine weitere Ausführungsform einer Leitungsführungsanordnung in perspektivischer Darstellung.

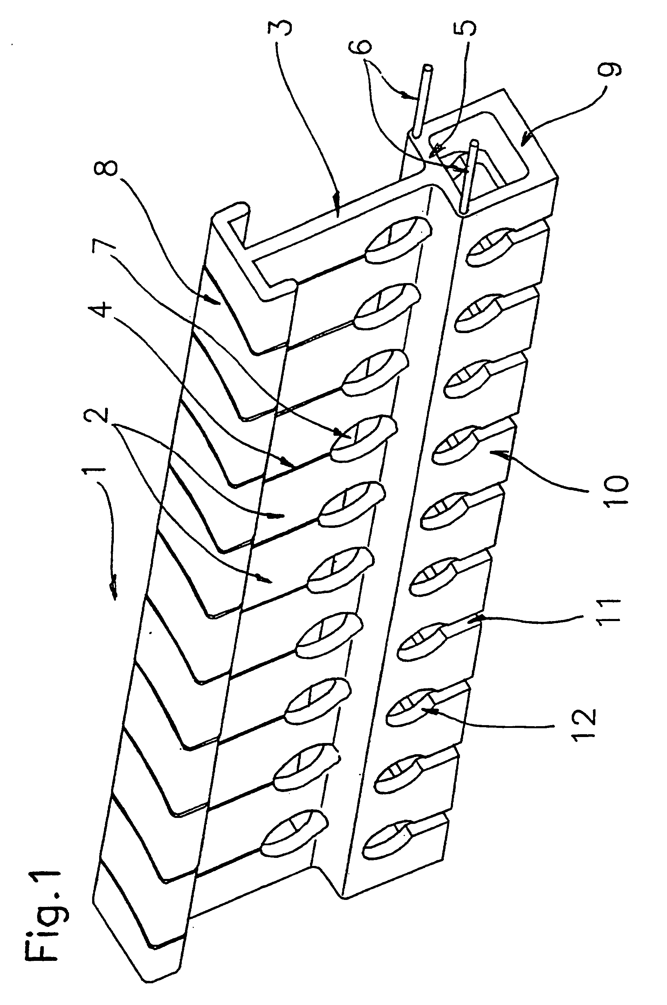

Fig. 1 zeigt einen Strang 1 für eine Leitungsführungsanordnung. In der Fig. 1 ist der besseren Übersicht wegen die Leitungsführungsanordnung als solche nicht dargestellt.

Der Strang 1 aus Kunststoff besitzt gelenkig verbundene Segmente 2, welche längs der Strangrichtung Seitenwandbereiche 3 aufweisen. Die Segmente 2 sind durch Quertrennungen 4 voneinander getrennt.

In dem dargestellten Ausführungsbeispiel ist der Strang 1 wenigstens teilweise als ein Hohlprofilstrang ausgebildet. Der Hohlprofilstrang weist einen Tragwandbereich 5 und einen Bodenwandbereich 9 auf. Der Tragwandbereich 5 und der Bodenwandbereich 9 werden durch zwei im wesentlichen parallel zueinander verlaufende Seitenwände 10 verbunden. Der als Hohlprofilstrang ausgebildete Strang 1 ist in dem dargestellten Ausführungsbeispiel im wesentlich rechtförmig ausgebildet. Der Seitenwandbereich 3 ist im wesentlichen mittig auf dem Tragwandbereich 5 ausgebildet. Auf der gegenüberliegenden Seite des Hohlprofils weist der Seitenwandbereich 3 einen Deckenwandbereich 8 auf. Diese ist mittig auf dem Seitenwandbereich 3 angeordnet und als Profilstrang ausgebildet. Der Deckenwandbereich 8 weist zwei im wesentlichen parallel zur Strangrichtung ausgebildete Randbereiche auf. Der Deckenwandbereich 8 ist C-förmig ausgebildet. Die wenigstens teilweise Ausführung des Strangs 1 als Hohl- bzw. Profilstrang verleiht einer Leitungsführungsanordnung eine erhöhte Festigkeit und Torsionssteifigkeit.

Die Quertrennungen 4 sind in gewählten Abständen zueinander angeordnet und erstrecken sich durch den Deckenwandbereich 8 hindurch und setzen sich im Seitenwandbereich 3 mindestens bis in Nähe des Tragwandbereichs 5 fort. Die Quertrennungen 4 erweitern sich in Aussparungen 7 mit einem im wesentlichen kreisförmigen Querschnitt. Durch die kreisförmigen Aussparungen 7 wird die Belastung im Bereich der Biegeachsen vermindert.

Der Strang 1 weist Ausnehmungen 11 auf, die sich durch den Bodenwandbereich 9 hindurch erstrecken. Die Ausnehmungen 11 setzen sich in der Seitenwand 10 bis in die Nähe des Tragwandbereichs 5 fort. Die Ausnehmungen 11 erweitern sich in Aufweitungen 12 mit einem im wesentlichen kreisförmigen Querschnitt. Die Breite der Ausnehmungen 11 bestimmt den Verschwenkwinkel benachbarter Segmente 2. Durch den Verschwenkwinkel benachbarter Segmente 2 wird auch der Krümmungsradius des Strangs 1 festgelegt. Der Strang 1 ist somit mit integrierten Krümmungsradiusbegrenzem ausgebildet.

Fig. 1 zeigt, daß der Strang 1 bevorzugt zwei Verstärkungsfasern 6 besitzt, die im wesentlichen eine Erstreckung parallel zur Strangrichtung aufweisen und wesentlich im Tragwandbereich 5 angeordnet sind. Die Verstärkungsfasern 6 dienen der Übertragung von Zugkräften und erhöhen die Biegewechselfestigkeit des Strangs 1.

Die Verstärkungsfaser 6 erstreckt sich in dem dargestellten Ausführungsbeispiel über die gesamte Länge des Strangs 1. Die Verstärkungsfasern 6 sind ohne Unterbrechung über die Stranglänge ausgebildet und gewährleisten die Aufnahme von Zugkräften. Um eine Befestigungs- oder Verbindungsmöglichkeit vorzusehen, stehen die Verstärkungsfasern 6 hervor. Diese hervorstehenden Bereiche der Verstärkungsfasern 6 ermöglichen die Befestigung des Stranges 1 an einem Wandbefestigungsteil oder gewährleisten die Verbindung mit angrenzenden Strängen 1.

Die Verstärkungsfaser 6 ist über die gesamte Länge des Strangs 1 derart angeordnet, daß die Verstärkungsfasern 6 vom Material des Tragwandbereichs 5 umschlossen sind.

Die Verstärkungsfaser 6 ist bevorzugt als Stahldraht ausgeführt. Die Biegewechselfestigkeits- und Zugfestigkeitseigenschaften des Stahldrahts erhöhen in der dargestellten Ausführungsform die Biegewechselfestigkeit des Strangs 1.

Die Verstärkungsfasern 6 sind im wesentlichen symmetrisch zum Seitenwandbereich 3 in der Nähe des Zusammenstoßes von Tragwandbereich 5 und Seitenwand 10 angeordnet. Dieser Bereich ist besonders hoch beansprucht und bei einer Biegebeanspruchung als bevorzugter Bereich für eine Rißausbreitung anzusehen. Die Anordnung der Verstärkungsfaser 6 in diesem Bereich ermöglichen eine deutliche Erhöhung der Biegewechselfestigkeit des Strangs 1. Die symmetrische Anordnung zum Seitenwandbereich 3 gewährleistet eine symmetrische Beanspruchung im Querschnitt des Tragwandbereichs 5.

Der Strang 1 der dargestellten Ausführungsforrn ist aus Kunststoff und wird extrudiert. Der Stahldraht wird vor dem Extrudiervorgang in die Extrudierform derart positioniert, daß die sich dieser nach dem Aushärten des Strangs in dem beschriebenen Bereich des Tragwandbereichs 5 befindet. Anschließend werden die Segmente ausgebildet.

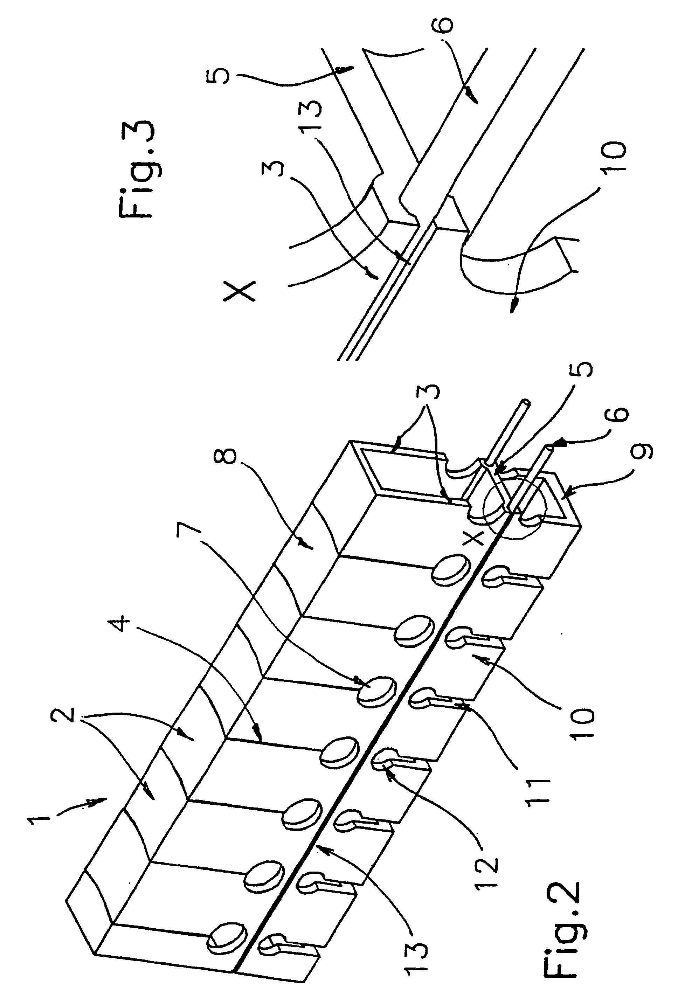

Fig. 2 zeigt ein weiteres Ausführungsbeispiel eines Strangs 1 einer Leitungsführungsandordnung.

Der Strang 1 weist gelenkig verbundene Segmente 2 auf, welche längs der Strangrichtung jeweils zwei Seitenwandbereiche 3 aufweisen. Die Segmente 2 sind durch Quertrennungen 4 voneinander getrennt.

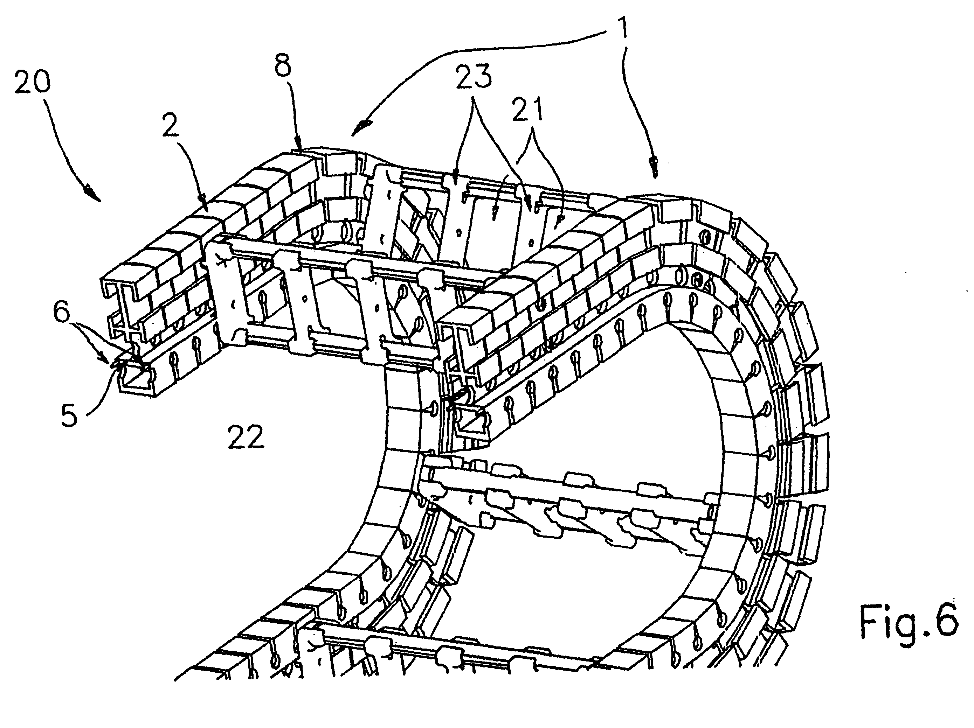

Der dargestellte Strang 1 ist als ein Hohlprofilstrang ausgebildet. Der Hohlprofilstrang weist einen Deckenwandbereich 8 und einen Bodenwandbereich 9 auf. Ein Tragwandbereich 5 ist im wesentlichen parallel zwischen dem Deckenwandbreich S und dem Bodenwandbereich 9 angeordnet und unterteilt das Hohlprofil. In dem Hohlprofil können Leitungen geführt werden. Der Strang kann auch zum Aufbau einer Leitungsführungsanordnung dienen, wie sie beispielsweise in der Figur 6 dargestellt ist. Der Deckenwandbereich 8 und der Tragwandbereich 5 werden durch zwei im wesentlichen parallel zueinander verlaufenden Seitenwandbereiche 3 verbunden. In einer Ebene, in welcher jeweils ein Seitenwandbereich 3 angeordnet sind, ist weiterhin eine Seitenwand 10 angeordnet, welche den Tragwandbereich 5 und den Bodenwandbereich 9 verbindet. Der Strang 1 in dem dargestellten Ausführungsbeispiel weist somit zwei Hohlprofile auf, welche rechteckig ausgebildet sind. Die Seitenwände 10 des Strangs 1 werden durch Ausnehmungen 11 und Aufweitungen 12 begrenzt. Die Ausnehmungen 11 erstrecken sich durch den Bodenwandbereich 9 hindurch. Zwischen einem Seitenwandbereich 3 und einer Seitenwand 10 eines Segmentes 2 ist jeweils eine Verstärkungsfaser 6 im Tragwandbereich 5 angeordnet. Diese Ausführungsform zeichnet sich durch eine besonders gute Verdrehsteifigkeit aus. Die Anordnung der Verstärkungsfaser 6 im Tragwandbereich 5 wird nachfolgend anhand der Fig. 3 erläutert.

Die Fig. 3 zeigt eine Detailansicht eines Strangs 1 aus Kunststoff einer Leitungsführungsanordnung wie sie in Fig. 2 dargestellt ist. Die zwei Verstärkungsfasern 6 sind bei diesem Ausführungsbeispiel nur teilweise vom Material des Tragwandbereichs 5 umschlossen. Der Strang 1 weist demzufolge eine Nut 13 auf, welche den Seitenwandbereich 3 und die Seitenwand 10 voneinander beabstandet. Eine Anordnung der Verstärkungsfaser 6 am Strang 1 in der dargestellten Weise ist besonders im Hinblick auf eine Nachrüstung bekannter Stränge 1 einer Leitungsführungsanordnung bedeutsam.

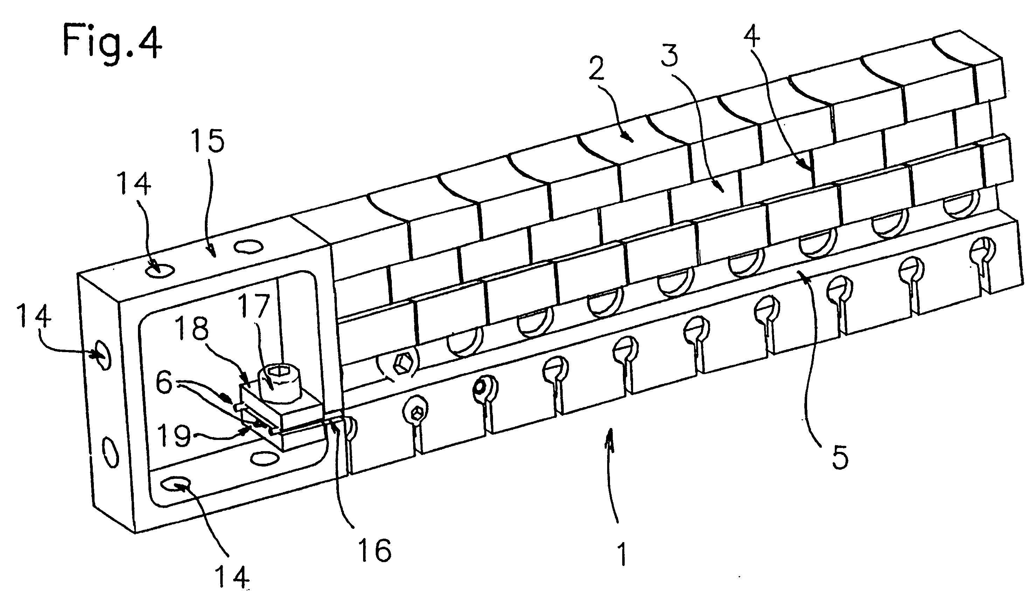

Fig. 4 zeigt ein noch weiteres Ausführungsbeispiel eines Stranges 1 für eine Leitungsführungsanordnung. Die Segmente 2 weisen längs der Strangrichtung Seitenwandbereiche 3 auf, welche als ein T-Profil ausgeführt sind. Die Segmente 2 sind durch Quertrennungen 4 voneinander getrennt. Im Tragwandbereich 5 sind zwei Verstärkungsfasern 6 im wesentlichen parallel zur Strangrichtung angeordnet. Die Verstärkungsfasern 6 stehen aus dem Strang 1 hervor.

Die in Fig. 4 dargestellte Ausführungsform weist eine Anschlußvorrichtung 15 auf, welche in Strangrichtung an den Strang 1 angrenzt. Diese Anschlußvorrichtung 15 weist zwei Rillen 16 auf, in welche die hervorstehenden Bereiche der Verstärkungsfasern 6 angeordnet sind. Die Anschlußvorrichtung 15 ist senkrecht zur Strangrichtung als ein rechteckiges Hohlprofil ausgeführt. Die Anschlußvorrichtung weist zudem Anschlußbohrungen 14 auf, welche eine Befestigungs- oder Verbindungsmöglichkeit mit einer nicht dargestellten An- oder Auflagefläche dienen.

Die hervorstehenden und in der Rille 16 geführten Bereiche der Verstärkungsfasern 6 sind im Inneren des Hohlprofils der Anschlußvorrichtung 15 zwischen einer Oberplatte 18 und einer Unterplatte 19 eingespannt. Die notwendige Kraft zum Einspannen der Verstärkungsfasern 6 zwischen der Oberplatte 18 und der Unterplatte 19 wird mittels einem Befestigungsmittel 17 erzeugt. In der dargestellten Ausführungsform in Fig. 4 ist das Befestigungsmittel 17 als Schraubverbindung ausgeführt. Oberplatte 18 und Unterplatte 19 liegen an der Anschlußvorrichtung 15 an. Auf diese Weise werden im Strang auftretende Zugkräfte auf die Verstärkungsfasern 6 übertragen.

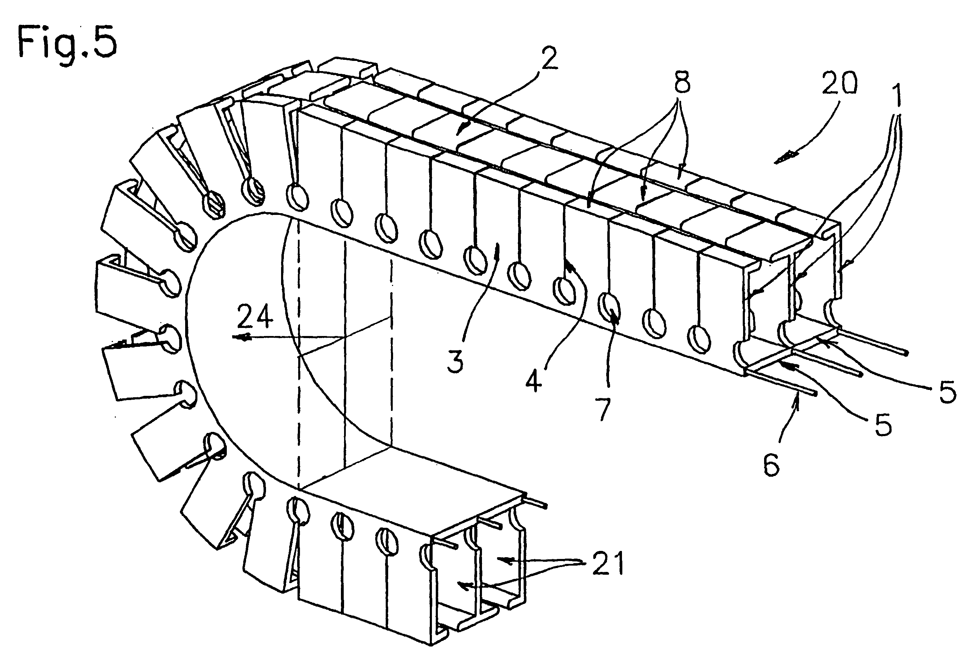

Fig. 5 zeigt eine Leitungsführungsanordnung 20 aus Kunststoff, welche einen Strang 1 mit gelenkig verbundenen Segmenten 2 aufweist. Der Strang 1 weist zwei Kanäle 21 auf, die im wesentlichen parallel zueinander verlaufen. Die Segmente 2 sind durch Quertrennungen 4 sowie Aussparungen 7 voneinander getrennt.

Der Tragwandbereich 5 der Leitungsführungsanordnung 20 weist drei Verstärkungsfasern 6 auf, wobei jede Verstärkungsfaser 6 zusätzlich in einer Ebene durch den Seitenwandbereich 3 eines Strangs 1 angeordnet ist. Eine derart ausgebildete Leitungsführungsanordnung 20 zeichnet sich durch besonders kleine Biegeradien 24 aus. Die Führungsräume 21 dienen zum Beispiel der Aufnahme unterschiedlicher Energie- oder Versorgungsleitungen. Die Anordnung von drei Verstärkungsfasern 6 im Tragwandbereich 5 gewährleistet auch bei kleinen Biegeradien 24 und einem relativ hohen Gewicht der zu führenden Leitungen eine deutlich verbesserte Biegewechselfestigkeit der Leitungsführungsanordnung.

Fig. 6 zeigt eine weitere Ausführungsform einer Leitungsführungsanordnung 20 mit zwei Strängen 1. Die Stränge 1 sind mit Querstreben 22 voneinander beabstandet. Gegenüberliegende Segmente 2 der Stränge 1 sind mit zwei Querstreben 22 derart verbunden, daß eine Querstrebe 22 nahe dem Deckenwandbereich 8 und eine weitere Querstrebe 22 nahe dem Tragwandbereich 5 angeordnet ist. Die Anordnung der Querstreben 22 in Strangrichtung ist frei wählbar. Zwei Querstreben 22 sowie die gegenüberliegenden Segmente 2, an welchen die Querstreben 22 befestigt sind, bilden einen Kanal 21. Mittels Trennstegen 23, welche frei wählbar zwischen zwei Querstreben 22 zweier gegenüberliegender Segmente 2 angeordnet und befestigt sind, kann der Kanal 21 unterteilt werden. Die Führungsräume 21 dienen der Aufnahme von Energie- und/oder Versorgungsleitungen.

Die beiden Stränge in der dargestellten Ausführungsform weisen jeweils einen Tragwandbereich 5 auf, in welchem zwei Verstärkungsfasern 6 angeordnet sind. Die Verstärkungsfasern 6 erhöhen die Biegewechselfestigkeit des Stranges 1 wie oben beschrieben. Dies führt gleichfalls zu einer erhöhten Biegewechselfestigkeit der Leitungsführungsanordnung 20.

### Bezugszeichenliste

- 1: Strang
- 2: Segment
- 3: Seitenwandbereich
- 4: Quertrennung
- 5: Tragwandbereich
- 6: Verstärkungsfaser
- 7: Aussparung
- 8: Deckenwandbereich
- 9: Bodenwandbereich
- 10: Seitenwand
- 11: Ausnehmung
- 12: Aufweitung
- 13: Nut
- 14: Anschlußbohrung
- 15: Anschlußvorrichtung
- 16: Rille
- 17: Befestigungsmittel
- 18: Oberplatte
- 19: Unterplatte
- 20: Leitungsführungsanordnung
- 21: Führungsraum
- 22: Querstrebe
- 23: Raumteiler
- 24: Biegeradius

## Patentansprüche

1. Strang (1) aus Kunststoff einer Leitungsführungsanordnung, der einen Tragwandbereich (5) und gelenkig verbundene Segmente (2) besitzt welche längs der Strangrichtung Seitenwandbereiche (3) aufweisen und deren Begrenzung quer zur Längsrichtung des Strangs (1) ausgeprägte Quertrennungen (4) sind, die sich in ausgewählten Abständen zueinander bis in die Nähe des entlang des Strangs (1) verlaufenden Tragwandbereichs (5) erstrecken, **dadurch gekennzeichnet, daß** der Strang (1) wenigstens über einen Teil seiner Längserstreckung mindestens eine Verstärkungsfaser (6) besitzt, die im wesentlichen eine Erstreckung parallel zur Strangrichtung answeist und im wesentlichen im Tragwandbereich (5) angeordnet ist.

2. Strang nach Anspruch 1, **dadurch gekennzeichnet daß** sich die wenigstens eine Verstärkungsfaser (6) wenigstens über die gesamte Länge des Strangs (1) erstreckt.

3. Strang nach Anspruch 2, **dadurch gekennzeichnet daß** sich die wenigstens eine Verstärkungsfaser (6) über den Tragwandbereich (5) hinaus erstreckt.

4. Strang nach einem der Ansprüche 1 bis 3, **dadurch gekennzeichnet, daß** die wenigstens ein Verstärkungsfaser (6) am Tragwandbereich (5) geführt wird.

5. Strang nach einem der Ansprüche 1 bis 3, **dadurch gekennzeichnet, daß** die wenigstens eine Verstärkungfaser (6) wenigstens teilweise an dem Tragwandbereich (5) befestigt ist.

6. Strang nach einem der Ansprüche 1 bis 5, **dadurch gekennzeichnet, daß** die wenigstens eine Verstärkungsfaser vom Material des Tragwandbereichs (5) wenigstens teilweise umschlossen ist.

7. Strang nach einem der Ansprüche 1 bis 6, **dadurch gekennzeichnet, daß** die wenigstens eine Verstärkungsfaser (6) eine höhere Biegewechsel- und/oder Zugfestigkeit besitzt als der Tragwandbereich (5).

8. Strang nach Anspruch 7, **dadurch gekennzeichnet, daß** die wenigstens eine Verstärkungsfaser (6) aus einem Stahldraht besteht.

9. Strang nach einem der Ansprüche 1 bis 8, **dadurch gekennzeichnet, daß** der Strang (1) mehrere Verstärkungsfasern (6) im Tragwandbereich (5) besitzt, die im wesentlichen symmetrisch zu den Seitenwandbereichen (3) angeordnet sind.

10. Leitungsführungsanordnung mit wenigstens einem Strang nach einem der Ansprüche 1 bis 9, wobei mindestens zwei im wesentlichen parallele Stränge (1) mit Stegen verbunden sind, die in gewählten Abständen zueinander an gegenüberliegenden Segmenten (2) befestigt sind, wobei die Segmente (4) und die Stege einen Führunsgskanal zum Führen wenigstens einer Leitung begrenzen.

11. Verfahren zum Herstellen eines Strangs (1) aus Kunststoff einer Leitungsführungsanordnung, der einen Tragwandbereich (5) und gelenkig verbundene Segmente (2) hat, die längs der Strangrichtung Seitenwandbereiche (3) anfweisen und deren Begrenzung quer zur Längsrichtung des Strangs ausgeprägte Quertrennungen (4) sind, die sich in ausgewählten Abständen zueinander bis in die Nähe des entlang des Strangs (1) verlaufenden Tragwandbereichs (5) erstrecken, bei dem der Strang (1) extrudiert und die Segmente (2) ausgebildet werden, wobei vor oder nach der Ausbildung der Segments (2) im wesentlichen der Tragwandbereich 5 mindestens eine Verstärkungsfaser (6) aufweist, die im wesentlichen parallel zur Strangrichtung verläuft.

12. Verfahren nach Anspruch 11 , bei dem im Tragwandbereich (5) eine Längsnut ausgebildet und die Verstärkungsfaser (6) in diese eingelegt wird.

13. Verfahren nach Anspruch 11, bei dem der Strang (1) extrudiert und die Segmente (2) ausgebildet werden, wobei vor dem Extrudiervorgang die Verstärkungsfaser (6) so in eine Extrudierform eingelegt wird, dass nach dem Extrudiervorgang die Verstärkungsfeser (6) im wesentlichen im Tragwandbereich (5) angeordnet ist

14. Verfahren nach Anspruch 11, bei dem der Strang (1) kontinuiderlich extrudiert und die Segmente (2) ausbildet werden, wobei die Verstärkungsfaser (6) dem Kunststoff im geschmolzenen Zustand kontinuierlich zugeführt wird und anschließend mit dem geschmolzenen Kunststoff durch ein Extrudierwerkzeug geführt wird, nach dem Extrudiervorgang die Verstärkungsfeser (6) im wesentlichen im Tragwandbereich (5) angeordnet ist.

## Claims

1. Strand (1) of plastic for a line guide arrangement, the strand comprising a support wall portion (5) and articulatedly joined segments (2), which include side wall portions (3) along the direction of the strand, and the boundaries of which are transverse separations (4) formed crosswise to the longitudinal direction of the strand (1), the transverse separations extending at selected distances from one another to the vicinity of the support wall portion (5) extending along the strand (1), **characterised in that** the strand (1) comprises at least one reinforcement fibre (6), reaching over at least a part of the longitudinal extension of the strand, which extends substantially parallel to the direction of the strand, and which is arranged substantially in the support wall portion (5).

2. Strand according to claim 1, **characterised in that** the at least one reinforcement fibre (6) extends at least over the entire length of the strand (1).

3. Strand according to claim 2, **characterised in that** the at least one reinforcement fibre (6) projects beyond the support wall portion (5).

4. Strand according to one of claims 1 to 3, **characterised in that** the at least one reinforcement fibre (6) extends on the support wall portion (5).

5. Strand according to one of claims 1 to 3, **characterised in that** the at least one reinforcement fibre (6) is attached at least in part to the support wall portion (5).

6. Strand according to one of claims 1 to 5, **characterised in that** the at least one reinforcement fibre is at least partially surrounded by the material of the support wall portion (5).

7. Strand according to one of claims 1 to 6, **characterised in that** the at least one reinforcement fibre (6) possesses a higher alternating bending strength and/or tensile strength than the support wall portion (5).

8. Strand according to claim 7, **characterised in that** the at least one reinforcement fibre (6) consists of a steel wire.

9. Strand according to one of claims 1 to 8, **characterised in that** the strand (1) comprises in the support wall portion (5) a plurality of reinforcement fibres (6), which are arranged substantially in symmetry to the side wall portions (3).

10. Line guide arrangement comprising at least one strand of one of claims 1 to 9, wherein at least two substantially parallel strands (1) are interconnected by cross members, which are attached at selected distances from one another to opposite segments (2), the segments (2) and the cross members defining a guide channel for running at least one line.

11. Method of making a strand (1) of plastic for a line guide arrangement, the strand comprising a support wall portion (5) and articulatedly joined segments (2), which include side wall portions (3) along the direction of the strand, and whose boundaries are transverse separations (4) formed crosswise to the longitudinal direction of the strand, the transverse separations extending at selected distances from one another to the vicinity of the support wall portion (5) extending along the strand (1), wherein the strand (1) is extruded, and the segments (2) are formed, and wherein before or after the formation of the segments substantially the support wall portion (5) has at least one reinforcement fibre (6), which reinforcement fibre (6) extends substantially parallel to the direction of the strand.

12. Method according to claim 11, wherein in the support wall portion (5) a longitudinal groove is formed, and the reinforcement fibre is inserted into same.

13. Method according to claim 11, wherein the strand (1) is extruded, and the segments (2) are formed, and wherein the reinforcement fibre (6) is inserted in such a way into an extrusion die before the extrusion step, that after the extrusion step the reinforcement fibre (6) is arranged substantially in the support wall portion (5).

14. Method according to claim 11, wherein the strand (1) is continuously extruded, and the segments (2) are formed, and wherein the reinforcement fibre (6) is continuously supplied to the plastic in a molten state, and subsequently advances with the molten plastic through an extrusion and wherein the reinforcement fibre (6) is arranged after the extrusion process substantially in the support wall portion (5).

## Revendications

1. Brin (1) en matière plastique d'un ensemble de guidage de lignes, le brin comportant une zone de paroi de support (5) et des segments (2) étant reliés de manière articulée qui le long de la direction du brin ont des zones de parois latérales (3) et dont la limitation sont des séparations transversales (4) formées transversalement à la direction longitudinale du brin (1), lesquelles séparations transversales (4) s'étendent les unes aux autres à des distances choisies jusqu'à proximité de la zone de paroi de support (5) qui s'étend le long du brin (1), **caractérisé en ce que** le brin (1) a au moins sur une partie de son étendue longitudinale au moins une fibre de renforcement (6), qui a sensiblement une extension parallèle par rapport à la direction du brin et qui est agencée sensiblement dans la zone de paroi de support.

2. Brin selon la revendication 1, **caractérisé en ce que** l'au moins une fibre de renforcement (6) s'étend sur au moins la longueur totale du brin (1).

3. Brin selon la revendication 2, **caractérisé en ce que** l'au moins une fibre de renforcement (6) s'étend au-delà de la zone de paroi de support (5).

4. Brin selon l'une des revendications 1 à 3, **caractérisé en ce que** l'au moins une fibre de renforcement (6) est guidée sur la zone de paroi de support (5).

5. Brin selon l'une des revendications 1 à 3, **caractérisé en ce que** l'au moins une fibre de renforcement (6) est fixée au moins partiellement sur la zone de paroi de support (5).

6. Brin selon l'une des revendications 1 à 5, **caractérisé en ce que** l'au moins une fibre de renforcement est entourée au moins partiellement par le matériau de la zone de paroi de support (5).

7. Brin selon l'une des revendications 1 à 6, **caractérisé en ce que** l'au moins une fibre de renforcement (6) a une résistance plus élevée à la flexion alternée et/ou à la traction que la zone de paroi de support (5).

8. Brin selon la revendication 7, **caractérisé en ce que** l'au moins une structure de renforcement (6) est constituée par un fil d'acier.

9. Brin selon l'une des revendications 1 à 8, **caractérisé en ce que** le brin (1) comporte dans la zone de paroi de support (5) une pluralité de fibres de renforcement (6) qui sont agencées sensiblement de manière symétrique par rapport au zones de parois latérales (3).

10. Ensemble de guidage de lignes avec au moins un brin selon l'une des revendications 1 à 9, dans quel cas au moins deux brins (1) sensiblement parallèles sont reliés par des entretoises qui à des distances choisies les unes aux autres sont fixées sur des segments (2) opposés, les segments (2) et les entretoises définissant un canal de guidage pour guider au moins une ligne.

11. Procédé destiné à la fabrication d'un brin (1) en matière plastique d'un ensemble de guidage de lignes qui présente une zone de paroi de support (5) et des segments (2) reliés de manière articulée qui le long de la direction de brin présentent des zones de parois latérales (3) et dont la limitation sont des séparations transversales (4) formées transversalement à la direction longitudinale du brin, lesquelles séparations transversales (4) s'étendent l'une par rapport à l'autre à des distances choisies jusqu'à proximité de la zone de paroi de support (5) s'étendant le long du brin (1), dans lequel le brin (1) est extrudé et les segments (2) réalisés, dans quel cas avant ou après la réalisation des segments (2) sensiblement la zone de paroi de support (5) a au moins une fibre de renforcement (6) qui s'étend sensiblement de manière parallèle par rapport à la direction du brin.

12. Procédé selon la revendication 11, dans lequel dans la zone de paroi de support (5) une rainure longitudinale est formée et la fibre de renforcement (6) est introduite dans celle-ci.

13. Procédé selon la revendication 11, dans lequel le brin (1) est extrudé et les segments (2) sont réalisés, dans quel cas avant l'opération d'extrusion la fibre de renforcement (6) est introduite de telle manière dans un moule à extrusion qu'après l'opération d'extrusion la fibre de renforcement (6) est agencée sensiblement dans la zone de paroi de support (5).

14. Procédé selon la revendication 11, dans lequel le brin (1) est extrudé continuellement et les segments (2) sont formés, dans quel cas la fibre de renforcement (6) est alimentée continuellement en état fondu dans la matière plastique et est ensuite guidée avec la matière plastique fondue à travers un outil d'extrusion, et dans quel cas après l'opération d'extrusion la fibre de renforcement (6) est agencée sensiblement dans la zone de paroi de support (5).
